(19) Europäisches Patentamt
European Patent Office
Office européen des brevets

(11) **EP 2 101 208 A1**

(12) **EUROPÄISCHE PATENTANMELDUNG**

(43) Veröffentlichungstag:
**16.09.2009 Patentblatt 2009/38**

(51) Int Cl.:
***G02B 9/62*** *(2006.01)*     *G02B 23/00* *(2006.01)*

(21) Anmeldenummer: **09154789.3**

(22) Anmeldetag: **10.03.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **11.03.2008   DE 102008013702**

(71) Anmelder: **Carl Zeiss Sports Optics GmbH
35576 Wetzlar (DE)**

(72) Erfinder: **Tautz, Volker Dr.
35578, Wetzlar (DE)**

(74) Vertreter: **Patentanwälte Freischem
An Groß St. Martin 2
50667 Köln (DE)**

(54) **Optisches System**

(57)     Die Erfindung betrifft ein optisches System (300) zur Abbildung eines Objekts auf eine Bilderfassungseinheit, insbesondere ein Objektiv (300) für ein Zielfernrohr. Der Erfindung liegt die Aufgabe zugrunde, ein optisches System anzugeben, bei dem das sekundäre Spektrum verringert ist und dessen relative Öffnung ausreichend ist, damit das optische System in einem Zielfernrohr einsetzbar ist. Gemäß der Erfindung weist das optische System (300) von dem Objekt in Richtung der Bilderfassungseinheit eine erste Linseneinheit (L1), eine zweite Linseneinheit (L2), eine dritte Linseneinheit (L3), eine vierte Linseneinheit (L4), eine fünfte Linseneinheit (L5) und eine sechste Linseneinheit (L6) auf, wobei die zweite Linseneinheit (L2) aus einem Material gefertigt ist, dessen Abweichung der relativen Teildispersion die folgende Bedingung erfüllt: $\Delta\theta_{gF} > 0,025$. Ferner ist die dritte Linseneinheit (L3) aus einem Material gefertigt, dessen Abweichung der relativen Teildispersion die folgende Bedingung erfüllt: $\Delta\theta_{gF} < -0,0015$. Darüber hinaus ist die fünfte Linseneinheit (L5) aus einem Material gefertigt, dessen Abweichung der relativen Teildispersion die folgende Bedingung erfüllt: $\Delta\theta_{gF} < -0,005$.

Fig. 1

**Beschreibung**

Die Erfindung betrifft ein optisches System zur Abbildung eines Objekts auf eine Bilderfassungseinheit, insbesondere ein Objektiv für ein Zielfernrohr. Der Begriff Bilderfassungseinheit ist dabei sehr weit auszulegen. Wenn das optische System als Objektiv eines Zielfernrohrs ausgebildet ist, dann ist die Bilderfassungseinheit beispielsweise die Netzhaut eines Betrachters. Es sind aber Ausführungsbeispiele denkbar, bei dem das erfindungsgemäße optische System zur Abbildung eines Objekts auf eine Bilderfassungseinheit in Form eines CCD ausgebildet ist.

Aus dem Stand der Technik ist ein Zielfernrohr bekannt, welches sich aus einem Objektiv, einem Okular und einem Umkehrsystem zusammensetzt. Das Zielfernrohr weist eine variable Vergrößerung auf, so dass Objekte vergrößert betrachtet werden können. Beispielhaft wird hierzu auf die DE 102 58 733 A1 verwiesen, aus der ein solches Zielfernrohr bekannt ist.

In der Regel ist das Objektiv eines derartigen Zielfernrohres achromatisch korrigiert. So sind die Bildschnittweiten für rotes und blaues Licht gleich lang, jedoch weichen die Bildschnittweiten für grünes Licht ab. Diese Abweichung wird in der Regel als Farblängsfehler oder auch als sekundäres Spektrum bezeichnet. Das sekundäre Spektrum des Objektivs eines derartigen Zielfernrohres führt jedoch oft zu Farbsäumen an Hell-Dunkel-Übergängen. Diese sind für einen Betrachter, der mittels des Zielfernrohrs ein Objekt betrachtet, oft sehr störend. Diese Störung ist umso ersichtlicher, je größer eine Vergrößerung des Objekts am Zielfernrohr gewählt wird.

Aus der US 6,226,132 B1 ist ein achromatisches Linsensystem bekannt, bei dem durch Wahl einer geeigneten abweichenden relativen Teildispersion das sekundäre Spektrum verringert werden kann. Allerdings beträgt die relative Öffnung dieses bekannten Linsensystems 1:10. Eine solche relative Öffnung ist aber für Zielfernrohre nicht ausreichend.

Der Erfindung liegt daher die Aufgabe zugrunde, ein optisches System anzugeben, bei dem das sekundäre Spektrum verringert ist und dessen relative Öffnung ausreichend ist, damit das optische System in einem Zielfernrohr einsetzbar ist.

Diese Aufgabe wird erfindungsgemäß durch ein optisches System mit den Merkmalen des Anspruchs 1 gelöst. Ein erfindungsgemäßes Fernrohr mit einem optischen System ist durch die Merkmale des Anspruchs 14 gegeben. Weitere Merkmale der Erfindung ergeben sich aus den weiteren Ansprüchen, der nachfolgenden Beschreibung und/ oder den beigefügten Figuren.

Das optische System gemäß der Erfindung ist zur Abbildung eines Objekts auf eine Bilderfassungseinheit vorgesehen. Wie oben bereits erwähnt, ist der Begriff Bilderfassungseinheit dabei sehr weit auszulegen. Wenn das erfindungsgemäße optische System als Objektiv eines Zielfernrohrs ausgebildet ist, dann ist die Bilderfassungseinheit beispielsweise die Netzhaut eines Betrachters. Es sind aber Ausführungsbeispiele denkbar, bei dem das erfindungsgemäße optische System zur Abbildung eines Objekts auf eine Bilderfassungseinheit in Form eines CCD ausgebildet ist.

Das erfindungsgemäße optische System weist vom Objekt in Richtung einer Bilderfassungseinheit eine erste Linseneinheit, eine zweite Linseneinheit, eine dritte Linseneinheit, eine vierte Linseneinheit, eine fünfte Linseneinheit und eine sechste Linseneinheit auf. Unter einer Linseneinheit wird eine einzelne Linse oder aber auch eine aus mehreren Linsen zusammengesetzte Linseneinheit verstanden. Die zweite Linseneinheit ist dabei aus einem Material gefertigt, dessen Abweichung der relativen Teildispersion die folgende Bedingung erfüllt:

$$\Delta\theta_{gF} > 0{,}025 \text{ (Bedingung 1).}$$

Die dritte Linseneinheit ist dabei aus einem Material gefertigt, dessen Abweichung der relativen Teildispersion die folgende Bedingung erfüllt:

$$\Delta\theta_{gF} < -0{,}0015 \text{ (Bedingung 2).}$$

Ferner ist vorgesehen, dass die fünfte Linseneinheit aus einem Material gefertigt ist, dessen Abweichung der relativen Teildispersion die folgende Bedingung erfüllt:

$$\Delta\theta_{gF} < -0{,}005 \text{ (Bedingung 3).}$$

$\Delta\theta_{gF}$ beschreibt die Abweichung der relativen Teildispersion hinsichtlich der g-Linie und der F-Linie von einer Normalgeraden, welche durch zwei Bezugsgläser gegeben ist. Im Fall der vorliegenden Erfindung sind dies die Gläser NSL7 sowie PBM2 des Unternehmens OHARA.

Die Abweichung der relativen Teildispersion von dieser Normalgeraden bestimmt sich dann aus der folgenden Formel:

$$\Delta\theta_{gF} = \frac{(n_g - n_F)}{(n_F - n_C)} - (0,6415 - 0,001618 \times \upsilon_d)$$

wobei ng die Brechzahl für die g-Linie, $n_F$ die Brechzahl für die F-Linie und $n_C$ die Brechzahl für die C-Linie ist. $\upsilon_d$ ist die Abbezahl für die d-Linie. Die entsprechenden Größen sind den Katalogen der Hersteller von Gläsern für Linseneinheiten zu entnehmen.

Überlegungen haben ergeben, dass durch die Wahl der oben angegebenen Bereiche der Abweichung der relativen Teildispersion ein optisches System geschaffen wird, bei dem das sekundäre Spektrum gering ist, so dass dieses einen Betrachter, welcher das optische System zur Betrachtung eines Objekts verwendet, nicht stört. Zudem weist das optische System eine relative Öffnung auf, welche den Einsatz des optischen Systems in einem Fernrohr, insbesondere in einem Zielfernrohr, ermöglicht. Vorzugsweise beträgt die relative Öffnung des optischen Systems gemäß der Erfindung mindestens 1:5,2. Vorzugsweise beträgt die relative Öffnung 1:4.

Bei einer ersten Ausführungsform der Erfindung weist das optische System insgesamt nur 6 Linsen auf, wobei die erste Linseneinheit, die zweite Linseneinheit, die dritte Linseneinheit, die vierte Linseneinheit, die fünfte Linseneinheit und die sechste Linseneinheit jeweils mit genau einer Linse versehen sind. Diese Ausführungsform weist den Vorteil auf, dass das Gewicht des optischen Systems gering gehalten werden kann. Dies ist insbesondere bei der Verwendung des optischen Systems in einem Zielfernrohr von Vorteil.

Bei einer weiteren Ausgestaltung der Erfindung ist die sechste Linseneinheit entlang einer optischen Achse des optischen Systems verschiebbar angeordnet. Vorzugsweise ist die sechste Linseneinheit - gesehen vom Objekt in Richtung einer Bilderfassungseinheit - vor einer Objektzwischenbildebene angeordnet, an der sich in Richtung der Bilderfassungseinheit vorzugsweise ein Umkehrsystem und ein Okular anschließt. Die Verstellbarkeit der sechsten Linseneinheit dient der Fokussierung bzw. der parallaxfreien Einstellung.

Bei einer bevorzugten Ausführungsform der Erfindung ist die erste Linseneinheit als Sammellinse ausgebildet. Alternativ oder zusätzlich hierzu ist es vorzugsweise vorgesehen, die zweite Linseneinheit ebenfalls als Sammellinse auszubilden.

Ferner ist es vorzugsweise vorgesehen, die dritte Linseneinheit als Zerstreuungslinse auszubilden. Bei einer weiteren Ausgestaltung der Erfindung ist es weiterhin vorgesehen, die vierte Linseneinheit als Sammellinse auszubilden. Ferner ist das optische System alternativ oder zusätzlich hierzu derart ausgestaltet, dass die fünfte Linseneinheit als Zerstreuungslinse ausgebildet ist. Auch die sechste Linseneinheit ist vorzugsweise als Zerstreuungslinse ausgebildet.

Bei einer weiteren Ausgestaltung der Erfindung bilden die vierte Linseneinheit und die fünfte Linseneinheit ein zerstreuendes Glied. Vorzugsweise sind sie dabei als Kittglied ausgebildet.

Bei einer bevorzugten Ausführungsform des optischen Systems weisen die erste Linseneinheit, die zweite Linseneinheit, die dritte Linseneinheit, die vierte Linseneinheit, die fünfte Linseneinheit und die sechste Linseneinheit die folgenden Eigenschaften auf (Tabelle 1), wobei die nachfolgenden Eigenschaften für ein optisches System mit einer Brennweite von f'=100mm normiert sind:

| Fläche | Radien | Abstände [mm] | $n_e$ | $\nu_e$ | $\Delta\theta_{gF}$ | Glas |
|---|---|---|---|---|---|---|
| Erste Fläche der ersten Linse | 44,524 | 3,461 | 1,48915 | 70,0 | 0,0022 | S-FSL5 |
| Zweite Fläche der ersten Linse | -106,362 | 3,479 | | | | |
| Erste Fläche der zweiten Linse | 24,858 | 4,673 | 1,49845 | 81,1 | 0,0280 | S-FPL51 |
| Zweite Fläche der zweiten Linse | -68,077 | 0,464 | | | | |
| Erste Fläche der dritten Linse | -63,358 | 1,056 | 1,72538 | 34,5 | -0,0019 | S-NBH8 |
| Zweite Fläche der dritten Linse | 35,626 | 10,788 | | | | |
| Erste Fläche der vierten Linse | 23,810 | 4,188 | 1,65222 | 33,5 | 0,0070 | S-TIM22 |
| Erste Fläche der fünften Linse | -23,810 | 1,038 | 1,61669 | 44,0 | -0,0065 | S-NBM51 |

(fortgesetzt)

| Fläche | Radien | Abstände [mm] | $n_e$ | $\nu_e$ | $\Delta\theta_{gF}$ | Glas |
|---|---|---|---|---|---|---|
| Zweite Fläche der fünften Linse | 16,144 | 32,014 | | | | |
| Erste Fläche der sechsten Linse | 166,151 | 0,727 | 1,59143 | 60,9 | -0,0018 | S-BAL35 |
| Zweite Fläche der sechsten Linse | 16,615 | | | | | |

In der oben genannten Tabelle 1 sind die einzelnen Flächen der Linseneinheiten und deren Radien angegeben. Ferner ist der Abstand des Scheitelpunkts einer ersten Fläche zu dem Scheitelpunkt der nächsten Fläche angegeben. Dies gibt ebenfalls die Dicke der einzelnen Linseneinheiten wieder. Ferner ist mit $n_e$ die Brechzahl und mit $\nu_e$ die Abbezahl bezeichnet. Darüber hinaus ist die Glassorte der jeweiligen Linseneinheiten angegeben, wobei die Notation der Glassorten sich auf Glassorten des Unternehmens OHARA bezieht. Wie oben erwähnt, sind die angegebenen Eigenschaften auf ein optisches System mit einer Brennweite von f'=100mm normiert. Durch Multiplikation der Radien und Abstände mit einem Faktor können die Eigenschaften auf andere Brennweiten proportional umgerechnet werden.

Bei einem weiteren Ausführungsbeispiel gemäß der vorliegenden Erfindung weisen die erste Linseneinheit, die zweite Linseneinheit, die dritte Linseneinheit, die vierte Linseneinheit, die fünfte Linseneinheit und die sechste Linseneinheit die folgenden Eigenschaften auf (Tabelle 2), wobei die nachfolgenden Eigenschaften für ein optisches System mit einer Brennweite von f'=100mm normiert sind:

| Fläche | Radien | Abstände [mm] | $n_e$ | $\nu_e$ | $\Delta\theta_{gF}$ | Glas |
|---|---|---|---|---|---|---|
| Erste Fläche der ersten Linse | 38,827 | 2,768 | 1,48915 | 70,0 | 0,0022 | S-FSL5 |
| Zweite Fläche der ersten Linse | -119,283 | 3,159 | | | | |
| Erste Fläche der zweiten Linse | 24,664 | 3,460 | 1,49845 | 81,1 | 0,0280 | S-FPL51 |
| Zweite Fläche der zweiten Linse | -68,056 | 0,443 | | | | |
| Erste Fläche der dritten Linse | -63,339 | 1,038 | 1,72538 | 34,5 | -0,0019 | S-NBH8 |
| Zweite Fläche der dritten Linse | 39,108 | 10,450 | | | | |
| Erste Fläche der vierten Linse | 23,803 | 2,768 | 1,65222 | 33,5 | 0,0070 | S-TIM22 |
| Erste Fläche der fünften Linse | -23,803 | 1,038 | 1,61669 | 44,0 | -0,0065 | S-NBM51 |
| Zweite Fläche der fünften Linse | 15,236 | 34,497 | | | | |
| Erste Fläche der sechsten Linse | 166,101 | 0,727 | 1,59143 | 60,9 | -0,0018 | S-BAL35 |
| Zweite Fläche der sechsten Linse | 16,610 | | | | | |

Auch in der oben genannten Tabelle 2 sind die einzelnen Flächen der Linseneinheiten und deren Radien angegeben. Ferner ist der Abstand des Scheitelpunkts einer ersten Fläche zu dem Scheitelpunkt der nächsten Fläche angegeben. Dies gibt die Dicke der einzelnen Linseneinheiten wieder. Ferner sind mit $n_e$ die Brechzahl und mit $\nu_e$ die Abbezahl bezeichnet. Darüber hinaus ist die Glassorte der jeweiligen Linseneinheiten angegeben, wobei die Notation der Glassorten sich auf Glassorten des Unternehmens OHARA bezieht. Wie oben erwähnt, sind die angegebenen Eigenschaften auf ein optisches System mit einer Brennweite von f'=100mm normiert. Durch Multiplikation der Radien und Abstände mit einem Faktor können die Eigenschaften auf andere Brennweiten proportional umgerechnet werden.

Bei einem weiteren Ausführungsbeispiel des erfindungsgemäßen optischen Systems ist es vorgesehen, dass ausgehend von den in den oben genannten Tabellen genannten Nennwerten die Radien und Abstände innerhalb eines Bereichs von ± 10%, die Brechzahlen $n_e$ innerhalb eines Bereichs von ± 0,05 und die Abbezahlen $\nu_e$ innerhalb eines Bereichs von ± 5 varriierbar sind.

Die Erfindung betrifft auch ein Fernrohr, insbesondere ein Zielfernrohr, welches mit einem optischen System ausgebildet ist, das mindestens eines der obengenannten Merkmale oder eine der obengenannten Merkmalskombinationen aufweist. Bei dem Fernrohr bzw. Zielfernrohr ist das optische System vorzugsweise als Objektiv ausgebildet, welches mit einem Umkehrsystem und einem Okular zusammenwirkt.

Nachfolgend wird die Erfindung anhand von Ausführungsbeispielen näher erläutert. Dabei zeigen

Fig. 1 eine schematische Darstellung einer ersten Ausführungsform eines Zielfernrohrs mit einem optischen System;

Fig. 2    ein Diagramm hinsichtlich des Farblängsfehlers (sekundäres Spektrum) für das optische System nach Figur 1;

Fig. 3    eine schematische Darstellung einer zweiten Ausführungsform eines Zielfernrohrs mit einem optischen System; sowie

Fig. 4    ein Diagramm hinsichtlich des Farblängsfehlers (sekundäres Spektrum) für das optische System nach Figur 3.

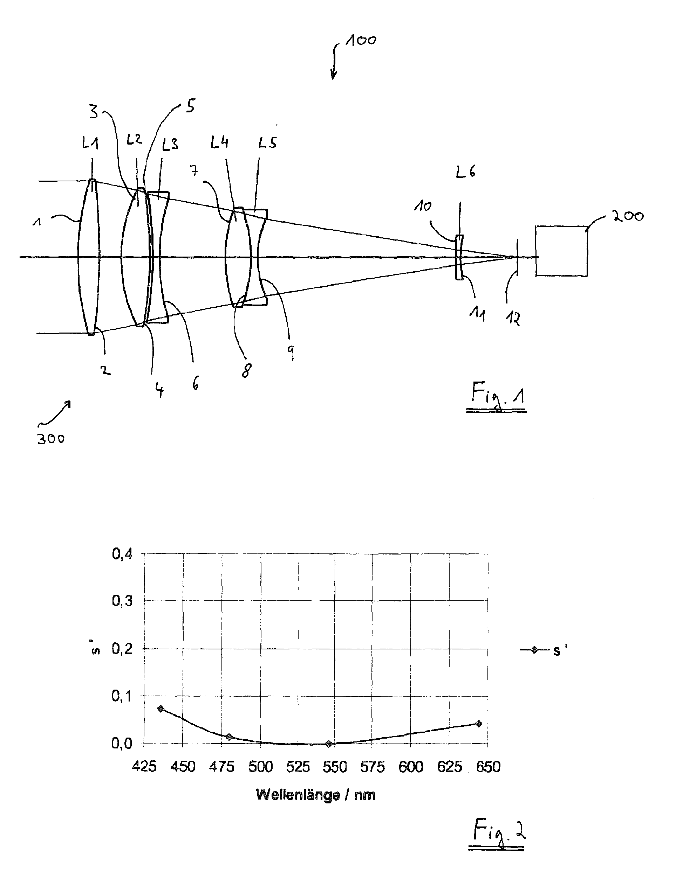

Figur 1 zeigt eine schematische Darstellung einer ersten Ausführungsform eines Zielfernrohres 100. Dieses setzt sich aus einem optischen System in Form eines Objektivs 300 und einem Okular 200 zusammen, wobei das Okular 200 nur schematisch dargestellt ist. Das Okular 200 umfasst auch ein Umkehrsystem, wie es bereits aus dem Stand der Technik bekannt ist.

Das Objektiv 300 des Zielfernrohrs 100 weist vom Objekt (nicht dargestellt) in Richtung einer Bilderfassungseinheit in Form einer Netzhaut eines Betrachters (nicht dargestellt) bzw. in Richtung des Okulars 200 eine erste Linseneinheit L1, eine zweite Linseneinheit L2, eine dritte Linseneinheit L3, eine vierte Linseneinheit L4, eine fünfte Linseneinheit L5 sowie eine sechste Linseneinheit L6 auf. Bei diesem Ausführungsbeispiel sind alle Linseneinheiten L1 bis L6 jeweils aus nur einer einzelnen Linse zusammengesetzt, so dass die Anzahl der Linsen des Objektivs 300 auf insgesamt 6 begrenzt ist. Dabei sind die erste Linseneinheit L1 als Sammellinse, die zweite Linseneinheit L2 als Sammellinse, die dritte Linseneinheit L3 als Zerstreuungslinse, die vierte Linseneinheit L4 als Sammellinse, die fünfte Linseneinheit L5 als Zerstreuungslinse und die sechste Linseneinheit L6 als Zerstreuungslinse ausgebildet. Die vierte Linseneinheit L4 und die fünfte Linseneinheit L5 bilden dabei ein zerstreuendes Glied.

Die sechste Linseneinheit L6 ist - von einem Objekt in Richtung einer Netzhaut eines Betrachters bzw. in Richtung des Okulars 200 - vor einer Objektivzwischenbildebene 12 verschiebbar entlang der optischen Achse des Objektivs 300 angeordnet. Die Verstellbarkeit der sechsten Linseneinheit L6 dient der Fokussierung bzw. der parallaxfreien Einstellung.

Nachfolgend werden in der Tabelle 3 die Eigenschaften der einzelnen Linseneinheiten L1 bis L6 angegeben:

| Flächennr. | Radien | Abstände [mm] | $n_e$ | $\nu_e$ | $\Delta\theta_{gF}$ | Glas |
|---|---|---|---|---|---|---|
| 1 | 44,524 | 3,461 | 1,48915 | 70,0 | 0,0022 | S-FSL5 |
| 2 | -106,362 | 3,479 | | | | |
| 3 | 24,858 | 4,673 | 1,49845 | 81,1 | 0,0280 | S-FPL51 |
| 4 | -68,077 | 0,464 | | | | |
| 5 | -63,358 | 1,056 | 1,72538 | 34,5 | -0,0019 | S-NBH8 |
| 6 | 35,626 | 10,788 | | | | |
| 7 | 23,810 | 4,188 | 1,65222 | 33,5 | 0,0070 | S-TIM22 |
| 8 | -23,810 | 1,038 | 1,61669 | 44,0 | -0,0065 | S-NBM51 |
| 9 | 16,144 | 32,014 | | | | |
| 10 | 166,151 | 0,727 | 1,59143 | 60,9 | -0,0018 | S-BAL35 |
| 11 | 16,615 | | | | | |

Die in der Tabelle 3 genannten Eigenschaften gelten für ein Objektiv 300 mit einer Brennweite von f'=100mm und mit einer relativen Öffnung von 1:4. Aus der Tabelle 3 gehen die einzelnen Flächen der einzelnen Linseneinheiten L1 bis L6 hervor. Ferner sind die Radien der einzelnen Flächen angegeben. Darüber hinaus ist der Abstand des Scheitelpunkts einer ersten Fläche zu dem Scheitelpunkt der nächsten Fläche angegeben. Dies gibt auch die Dicke der einzelnen Linseneinheiten L1 bis L6 wieder. Da die Linseneinheit L6 beweglich angeordnet ist, ist der Abstand zwischen der Fläche 9 und der Fläche 10 variabel. Der in der Tabelle 3 wiedergegebene Abstand zwischen der Fläche 9 und 10 ist daher nur beispielhaft zu verstehen. Ferner sind in der Tabelle 3 mit $n_e$ die Brechzahl und mit $\nu_e$ die Abbezahl bezeichnet. Darüber hinaus ist die Glassorte der jeweiligen Linseneinheiten L1 bis L6 angegeben, wobei die Notation der Glassorten sich auf Glassorten des Unternehmens OHARA bezieht. Wie oben erwähnt, sind die angegebenen Eigenschaften auf ein Objektiv 300 mit einer Brennweite von f'=100mm normiert. Durch Multiplikation der Radien und Abstände mit einem Faktor können die Eigenschaften auf andere Brennweiten proportional umgerechnet werden.

Das oben diskutierte Ausführungsbeispiel gemäß Figur 1 erfüllt die oben genannten Bedingungen 1 bis 3. Die Korrektur der Farblängsfehler ist bei diesem Ausführungsbeispiel nicht exakt bis zur apochromatischen Korrektur gebracht worden, bei der die Schnittweite für drei Wellenlängen gleich ist. Vielmehr erzielt man eine achromatische Korrektur, bei der die Schnittweite für zwei Wellenlängen gleich ist und bei der das sekundäre Spektrum stark verringert ist. Ferner wird durch den Einsatz der Linseneinheiten L4 und L5 eine gute Korrektur der sphärischen Abberation und des Gaußfehlers erzielt.

Bei dem oben diskutierten Ausführungsbeispiel ist die Linseneinheit L1 aus keinem Glas gebildet, welches eine abweichende relative Teildispersion aufweist. Gläser mit einer abweichenden relativen Teildispersion sind oft empfindlicher als andere Gläser, so dass Gläser mit einer abweichenden relativen Teildispersion zum Schutz der weiteren Linseneinheiten nicht so sehr geeignet sind. Aus diesem Grunde ist die Linseneinheit L1 vorzugsweise aus einem etwas unempfindlicheren Material gebildet.

Figur 2 zeigt ein Diagramm hinsichtlich des Farblängsfehlers (sekundäres Spektrum) für das Objektiv 300 nach Figur 1. Aufgetragen ist der Farblängsfehler s' über die Wellenlänge. Es ist ersichtlich, dass der Farblängsfehler s' gering ist.

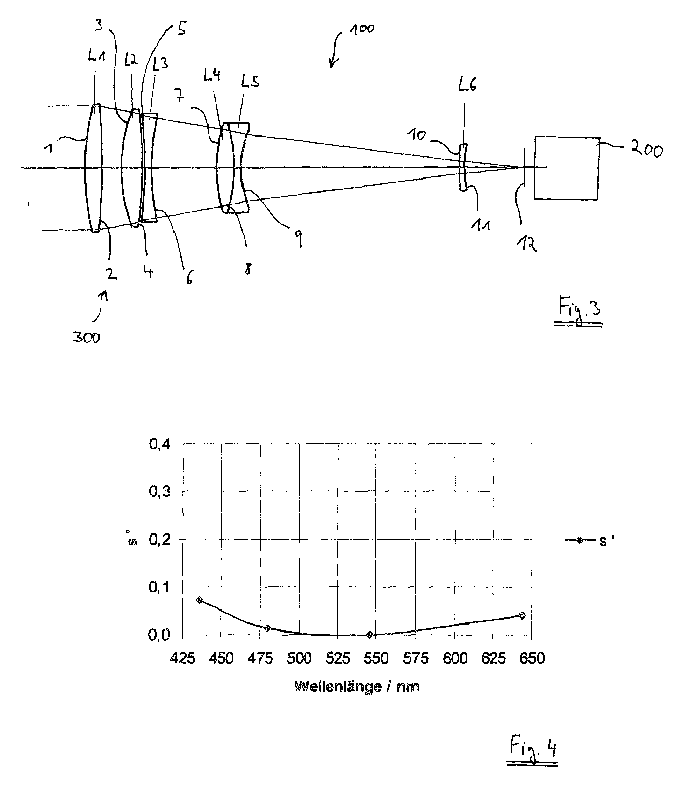

Figur 3 zeigt in einer schematischen Darstellung ein weiteres Ausführungsbeispiel eines erfindungsgemäßen Zielfernrohrs 100, das im Grunde genommen dem Zielfernrohr 100 gemäß der Figur 1 entspricht. Gleiche Bezugszeichen bezeichnen daher gleiche Bauteile. Im Unterschied zum Zielfernrohr 100 der Figur 1 weist das Zielfernrohr 100 der Figur 3 ein Objektiv 300 mit einer Brennweite von f'= 100mm und einer relativen Öffnung von 1:5,2 auf. Ferner ist das Objektiv 300 gemäß der Figur 3 durch die folgenden Eigenschaften charakterisiert (Tabelle 4):

| Flächennr. | Radien | Abstände [mm] | $n_e$ | $\nu_e$ | $\Delta\theta_{gF}$ | Glas |
|---|---|---|---|---|---|---|
| 1 | 38,827 | 2,768 | 1,48915 | 70,0 | 0,0022 | S-FSL5 |
| 2 | -119,283 | 3,159 | | | | |
| 3 | 24,664 | 3,460 | 1,49845 | 81,1 | 0,0280 | S-FPL51 |
| 4 | -68,056 | 0,443 | | | | |
| 5 | -63,339 | 1,038 | 1,72538 | 34,5 | -0,0019 | S-NBH8 |
| 6 | 39,108 | 10,450 | | | | |
| 7 | 23,803 | 2,768 | 1,65222 | 33,5 | 0,0070 | S-TIM22 |
| 8 | -23,803 | 1,038 | 1,61669 | 44,0 | -0,0065 | S-NBM51 |
| 9 | 15,236 | 34,497 | | | | |
| 10 | 166,101 | 0,727 | 1,59143 | 60,9 | -0,0018 | S-BAL35 |
| 11 | 16,610 | | | | | |

Hinsichtlich der Bedeutung der einzelnen Größen der Tabelle 4 wird auf die Erläuterungen zur Tabelle 3 verwiesen.

Das Objektiv 300 gemäß der Figur 3 weist dieselben Vorteile und Funktionen wie das Objektiv 300 gemäß der Figur 1 auf. Insbesondere werden auch hier die oben genannten Bedingungen 1 bis 3 erfüllt.

Zusätzlich ist das Objektiv 300 gemäß der Figur 3 derart ausgestaltet, dass damit der Bau eines schlanken Zielfernrohres möglich ist.

Figur 4 zeigt ein Diagramm hinsichtlich des Farblängsfehlers (sekundäres Spektrum) für das Objektiv 300 nach Figur 3. Aufgetragen ist der Farblängsfehler s' über die Wellenlänge. Auch hier ist es ersichtlich, dass der Farblängsfehler s' gering ist.

Die beiden Ausführungsbeispiele des Zielfernrohrs 100 und des Objektivs 300 weisen den Vorteil auf, dass durch die Wahl der oben angegebenen Bereiche der Abweichung der relativen Teildispersion optische Systeme geschaffen werden, bei denen das sekundäre Spektrum gering ist, so dass dieses einen Betrachter, welcher das Zielfernrohr 100 zur Betrachtung eines Objekts verwendet, nicht stört. Zudem weisen die Objektive 300 eine relative Öffnung auf, welche den Einsatz der optischen Systeme in einem Zielfernrohr ermöglicht. Die geringe Anzahl der verwendeten Linseneinheiten L1 bis L6 weisen den Vorteil auf, dass das Gewicht der Zielfernrohre 100 gering gehalten werden kann.

**Bezugszeichenliste**

| 100 | Zielfernrohr |
| 200 | Okular |
| 300 | Objektiv |
| L1 | erste Linseneinheit |
| L2 | zweite Linseneinheit |
| L3 | dritte Linseneinheit |
| L4 | vierte Linseneinheit |
| L5 | fünfte Linseneinheit |
| L6 | sechste Linseneinheit |
| 1 bis 11 | Flächen |
| 12 | Objektivzwischenbildebene |

**Patentansprüche**

1. Optisches System (300) zur Abbildung eines Objekts auf eine Bilderfassungseinheit, wobei das optische System (300) von dem Objekt in Richtung einer Bilderfassungseinheit eine erste Linseneinheit (L1), eine zweite Linseneinheit (L2), eine dritte Linseneinheit (L3), eine vierte Linseneinheit (L4), eine fünfte Linseneinheit (L5) und eine sechste Linseneinheit (L6) aufweist,
**dadurch gekennzeichnet, dass**

- die zweite Linseneinheit (L2) aus einem Material gefertigt ist, dessen Abweichung der relativen Teildispersion die folgende Bedingung erfüllt:

$$\Delta\theta_{gF} > 0,025$$

- die dritte Linseneinheit (L3) aus einem Material gefertigt ist, dessen Abweichung der relativen Teildispersion die folgende Bedingung erfüllt:

$$\Delta\theta_{gF} < -0,0015$$

und wobei
- die fünfte Linseneinheit (L5) aus einem Material gefertigt ist, dessen Abweichung der relativen Teildispersion die folgende Bedingung erfüllt:

$$\Delta\theta_{gF} < -0,005.$$

2. Optisches System (300) nach Anspruch 1, **dadurch gekennzeichnet, dass** die erste Linseneinheit (L1), die zweite Linseneinheit (L2), die dritte Linseneinheit (L3), die vierte Linseneinheit (L4), die fünfte Linseneinheit (L5) und die sechste Linseneinheit (L6) jeweils genau eine Linse (L1 bis L6) aufweisen.

3. Optisches System (300) nach Anspruch 1 oder 2, **dadurch gekennzeichnet, dass** die sechste Linseneinheit (L6) entlang einer optischen Achse des optischen Systems (300) verschiebbar angeordnet ist.

4. Optisches System (300) nach einem der vorangehenden Ansprüche, **dadurch gekennzeichnet, dass** die erste Linseneinheit (L1) als Sammellinse ausgebildet ist.

5. Optisches System (300) nach einem der vorangehenden Ansprüche, **dadurch gekennzeichnet, dass** die zweite Linseneinheit (L2) als Sammellinse ausgebildet ist.

6. Optisches System (300) nach einem der vorangehenden Ansprüche, **dadurch gekennzeichnet, dass** die dritte Linseneinheit (L3) als Zerstreuungslinse ausgebildet ist.

7. Optisches System (300) nach einem der vorangehenden Ansprüche, **dadurch gekennzeichnet, dass** die vierte Linseneinheit (L4) als Sammellinse ausgebildet ist.

8. Optisches System (300) nach einem der vorangehenden Ansprüche, **dadurch gekennzeichnet, dass** die fünfte Linseneinheit (L5) als Zerstreuungslinse ausgebildet ist.

9. Optisches System (300) nach einem der vorangehenden Ansprüche, **dadurch gekennzeichnet, dass** die sechste Linseneinheit (L6) als Zerstreuungslinse ausgebildet ist.

10. Optisches System (300) nach einem der vorangehenden Ansprüche, **dadurch gekennzeichnet, dass** die vierte Linseneinheit (L4) und die fünfte Linseneinheit (L5) ein zerstreuendes Glied bilden.

11. Optisches System (300) nach einem der vorangehenden Ansprüche, **dadurch gekennzeichnet, dass** die erste Linseneinheit (L1), die zweite Linseneinheit (L2), die dritte Linseneinheit (L3), die vierte Linseneinheit (L4), die fünfte Linseneinheit (L5) und die sechste Linseneinheit (L6) die folgenden Eigenschaften aufweisen und wobei diese Eigenschaften auf das optische System (300) mit einer Brennweite von f'=100 mm normiert sind:

| Fläche | Radien | Abstände [mm] | $n_e$ | $\nu_e$ | $\Delta\theta_{gF}$ | Glas |
|---|---|---|---|---|---|---|
| Erste Fläche (1) der ersten Linse (L1) | 44,524 | 3,461 | 1,48915 | 70,0 | 0,0022 | S-FSL5 |
| Zweite Fläche (2) der ersten Linse (L1) | -106,362 | 3,479 | | | | |
| Erste Fläche (3) der | 24,858 | 4,673 | 1,49845 | 81,1 | 0,0280 | S-FPL51 |
| zweiten Linse (L2) | | | | | | |
| Zweite Fläche (4) der zweiten Linse (L2) | -68,077 | 0,464 | | | | |
| Erste Fläche (5) der dritten Linse (L3) | -63,358 | 1,056 | 1,72538 | 34,5 | -0,0019 | S-NBH8 |
| Zweite Fläche (6) der dritten Linse (L3) | 35,626 | 10,788 | | | | |
| Erste Fläche (7) der vierten Linse (L4) | 23,810 | 4,188 | 1,65222 | 33,5 | 0,0070 | S-TIM22 |
| Erste Fläche (8) der fünften Linse (L5) | -23,810 | 1,038 | 1,61669 | 44,0 | -0,0065 | S-NBM51 |
| Zweite Fläche (9) der | 16,144 | 32,014 | | | | |
| fünften Linse (L5) | | | | | | |
| Erste Fläche (10) der sechsten Linse (L6) | 166,151 | 0,727 | 1,59143 | 60,9 | -0,0018 | S-BAL35 |
| Zweite Fläche (11)der sechsten Linse (L6) | 16,615 | | | | | |

12. Optisches System (300) nach einem der vorangehenden Ansprüche, **dadurch gekennzeichnet, dass** die erste Linseneinheit (L1), die zweite Linseneinheit (L2), die dritte Linseneinheit (L3), die vierte Linseneinheit (L4), die fünfte Linseneinheit (L5) und die sechste Linseneinheit (L6) die folgenden Eigenschaften aufweisen und wobei diese Eigenschaften auf das optische System (300) mit einer Brennweite von f'=100 mm normiert sind:

| Fläche | Radien | Abstände [mm] | $n_e$ | $\nu_e$ | $\Delta\theta_{gF}$ | Glas |
|---|---|---|---|---|---|---|
| Erste Fläche (1) der ersten Linse (L1) | 38,827 | 2,768 | 1,48915 | 70,0 | 0,0022 | S-FSL5 |
| Zweite Fläche (2) der ersten Linse (L1) | -119,283 | 3,159 | | | | |
| Erste Fläche (3) der zweiten Linse (L2) | 24,664 | 3,460 | 1,49845 | 81,1 | 0,0280 | S-FPL51 |

(fortgesetzt)

| Fläche | Radien | Abstände [mm] | $n_e$ | $\nu_e$ | $\Delta\theta_{gF}$ | Glas |
|---|---|---|---|---|---|---|
| Zweite Fläche (4) der zweiten Linse (L2) | -68,056 | 0,443 | | | | |
| Erste Fläche (5) der dritten Linse (L3) | -63,339 | 1,038 | 1,72538 | 34,5 | -0,0019 | S-NBH8 |
| Zweite Fläche (6) der dritten Linse (L3) | 39,108 | 10,450 | | | | |
| Erste Fläche (7) der vierten Linse (L4) | 23,803 | 2,768 | 1,65222 | 33,5 | 0,0070 | S-TIM22 |
| Erste Fläche (8) der fünften Linse (L5) | -23,803 | 1,038 | 1,61669 | 44,0 | -0,0065 | S-NBM51 |
| Zweite Fläche (9) der fünften Linse (L5) | 15,236 | 34,497 | | | | |
| Erste Fläche (10) der sechsten Linse (L6) | 166,101 | 0,727 | 1,59143 | 60,9 | -0,0018 | S-BAL35 |
| Zweite Fläche (11)der sechsten Linse (L6) | 16,610 | | | | | |

**13.** Optisches System (300) nach Anspruch 11 oder 12, **dadurch gekennzeichnet, dass** ausgehend von den im Anspruch 11 oder 12 genannten Nennwerten die Radien und Abstände innerhalb eines Bereichs von ± 10%, die Brechzahlen $n_e$ innerhalb eines Bereichs von ± 0,05 und die Abbezahlen $\nu_e$ innerhalb eines Bereichs von ± 5 variierbar sind.

**14.** Fernrohr (100) mit einem optischen System (300) nach einem der vorangehenden Ansprüche.

**15.** Fernrohr (100) nach Anspruch 14, **dadurch gekennzeichnet, dass** es ein Zielfernrohr ist.

_Fig. 1_

Wellenlänge / nm

_Fig. 2_

Fig. 3

s'

425 450 475 500 525 550 575 600 625 650

Wellenlänge / nm

Fig. 4

Europäisches
Patentamt

European
Patent Office

Office européen
des brevets

## EUROPÄISCHER RECHERCHENBERICHT

Nummer der Anmeldung

EP 09 15 4789

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP 2000 035534 A (KONISHIROKU PHOTO IND) 2. Februar 2000 (2000-02-02) * Zusammenfassung; Abbildung 1 * ----- | 1-15 | INV. G02B9/62 ADD. G02B23/00 |
| Y | US 5 952 256 A (MORISHITA MICHIKO [JP] ET AL) 14. September 1999 (1999-09-14) * Spalte 2, Zeile 65 - Zeile 67 * ----- | 1-15 | |
| A | US 2004/125445 A1 (HOOGLAND JAN [US]) 1. Juli 2004 (2004-07-01) * Zusammenfassung; Tabellen 10,11 * ----- | 1 | |
| A | EP 0 950 911 A (CANON KK [JP]) 20. Oktober 1999 (1999-10-20) * Abbildungen 7,10 * ----- | 1 | |

RECHERCHIERTE
SACHGEBIETE (IPC)

G02B

Der vorliegende Recherchenbericht wurde für alle Patentansprüche erstellt

| Recherchenort | Abschlußdatum der Recherche | Prüfer |
|---|---|---|
| Den Haag | 8. Mai 2009 | Lehtiniemi, Henry |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 15 4789

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2009

| Im Recherchenbericht angeführtes Patentdokument | Datum der Veröffentlichung | Mitglied(er) der Patentfamilie | | Datum der Veröffentlichung |
|---|---|---|---|---|
| JP 2000035534 A | 02-02-2000 | KEINE | | |
| US 5952256 A | 14-09-1999 | CN | 1198414 A | 11-11-1998 |
| | | JP | 3113604 B2 | 04-12-2000 |
| | | JP | 10265238 A | 06-10-1998 |
| US 2004125445 A1 | 01-07-2004 | KEINE | | |
| EP 0950911 A | 20-10-1999 | DE | 69931992 T2 | 11-01-2007 |
| | | JP | 3342400 B2 | 05-11-2002 |
| | | JP | 11295590 A | 29-10-1999 |
| | | US | 6268969 B1 | 31-07-2001 |

EPO FORM P0461

Für nähere Einzelheiten zu diesem Anhang : siehe Amtsblatt des Europäischen Patentamts, Nr.12/82

**EP 2 101 208 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10258733 A1
- US 6226132 B1